# EUROPEAN PATENT APPLICATION

(11) **EP 1 844 952 A1**
(43) Date of publication of application: **17.10.2007**
(21) Application number: 07003363.4
(22) Date of filing: 16.02.2007
(51) Int. Cl.: B60B 5/02, B60B 25/00, B60B 33/00

(54) **Wheel**

(30) Priority: 11.04.2006 IT FI20060025
(71) Applicant: Grosso, Raffaele, 80040 San Sebastiano al Vesuvio (Napoli) (IT)
(72) Inventor: Grosso, Raffaele, 80040 San Sebastiano al Vesuvio (Napoli) (IT)
(74) Representative: Strasser, Wolfgang

(57) **Abstract**

Wheel comprising a tyre (1), a rim (2) supporting tyre (1) and a tubular axle (3) which is positioned inside rim (2) and protrudes out of both sides of the rim. The rim (2) features an annular inner chamber (25) which houses an annular element (30) provided by the axle (3).

## Description

The present invention relates to a wheel which is especially, even if not exclusively, destined to equip chairs or walking carriages for handicapped people.

In particular, the wheel subject of the present invention can equip chairs or walking carriages for handicapped people intended to be used on unpaved grounds such as beaches, gardens, parks and, more generally speaking, in the open air.

The main aim of the present invention is to make the connection between the tyre, the rim and the axle of the wheel more reliable, effective and frictionless.

This result has been achieved according to the invention thanks to the device having the features described in claim 1. Other features of the present invention are the object of the dependent claims.

Thanks to the present innovation it is possible to obtain a more effective connection among the main parts of the wheel, that is to say the tyre, the rim and the axle, so as to ensure a remarkable reduction of dissipation due to friction and, at the same time, a higher reliability of the system and, in particular, a minor vulnerability to elements such as sand or earth which usually reduce the reliability of the wheels mounted on chairs for handicapped people used on beaches or, more generally speaking, outdoors. Moreover, a wheel according to the present invention is simple and economical in relation to the advantages it offers.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a schematic side view of a wheel according to the present invention;
- Fig. 2 is a section view according to line A-A of Fig. 1;
- Fig. 3 is an enlarged detail of Fig. 2;
- Fig. 4 is a perspective exploded view of the wheel shown in the previous figures;
- Fig. 5 is a side view of a wheel according to a further embodiment of the present invention;
- Fig. 6 is a section view according to line B-B of Fig. 5;
- Fig. 7 is an enlarged detail of Fig. 6;
- Fig. 8 is a perspective exploded view of the wheel shown in Figs 5 to 7.

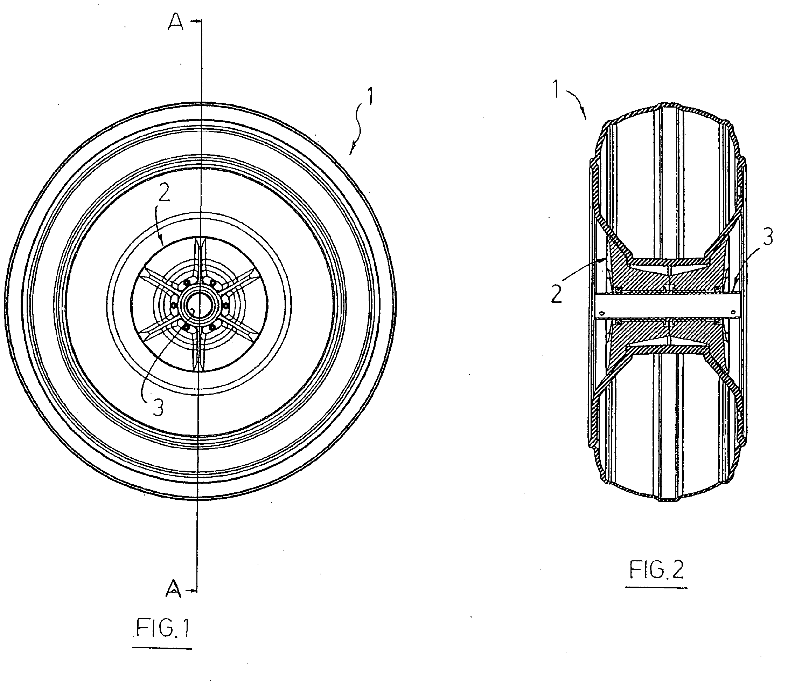

Reduced to its essential structure and with reference to Figs 1-4 of the enclosed drawings, a wheel according to the present invention comprises a tyre (1), a bi-conical rim (2) into which central groove the tyre bead is retained, and a tubular axle (3) which passes inside rim (2) and protrudes out of both sides of the rim.

Rim (2) consists of two cup-shaped elements (20,21) with a central through hole (24), which can be connected to each other at their respective minor or internal bases (200,210) by means of screws (26) passing through corresponding longitudinal holes (22). On the external side, said elements (20,21) feature radial ribs (23).

Axle (3) features an annular projection or ring (30) on its middle.

The two elements (20,21) of rim (2) are mounted on axle (3), on opposite sides with respect to said central ring (30), with interposition of two corresponding bushings (4).

Each of said bushings (4) features an annular head (40) at one of its ends, the external diameter of which exceeds the external diameter of the bushing body.

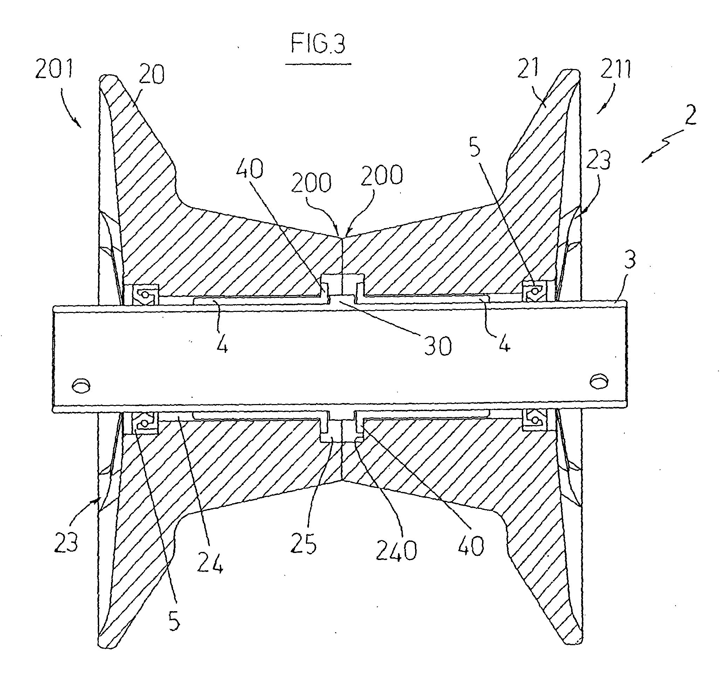

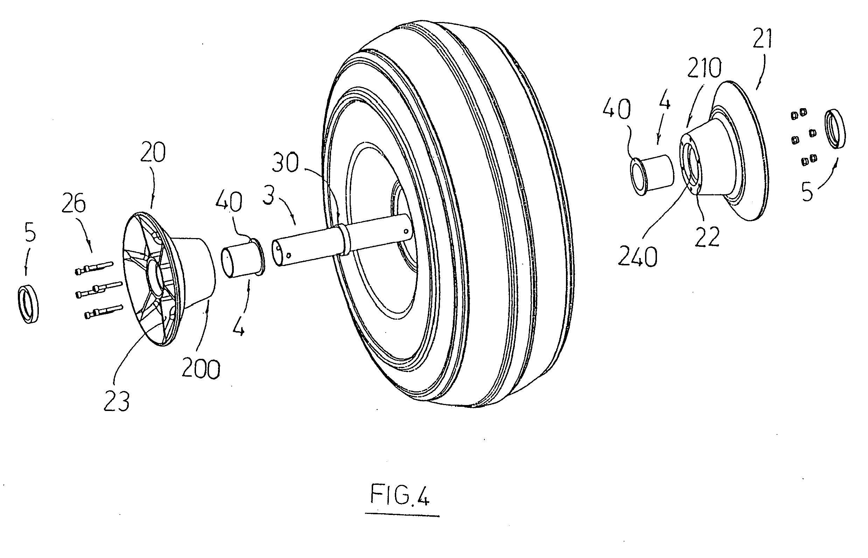

Each of the two elements (20,21) of rim (2) features an internal step at said minor bases, so as to provide, as shown in Figs. 3 and 4, a corresponding locally larger hole (24). In other words, at the minor base or internal base of each of the two elements of rim (2), central hole (24) has a larger diameter. In this way, at the internal base (200,201) of the two elements (20,21) which constitute rim (2) a re-entrant support seat (240) is provided for head (40) of a respective bushing (4).

In the assembled configuration, the body of each bushing (4) is inserted in central hole (24) of a corresponding element (20,21) of rim (2), so that head (40) of the bushing rests on said seat (240). The two bushings (4) are fitted on the axle (3) so as to allow corresponding heads (40) to be on the sides opposite said central ring (30). Then, the two elements of rim (2) can be connected by means of screws (26). Before completing this connection, it is necessary a small quantity of grease or of another lubricating material is put in the closed annular chamber (25) which is delimited by the opposite minor bases of the two elements of the rim, by the heads (40) of bushings (4) and by ring (30) of axle (3). Two aluminium peripheral rings (5) are mounted on axle (3) on opposite sides, that is to say in corresponding annular seats provided on major bases (201,211) of said elements (20,21), so that each of said bushings (4) is positioned between the central ring of the axle and a corresponding peripheral ring (5).

Said bushings (4) can be made of graphite, for example, that is of graphitized nylon.

Elements (20,21) of rim (2) can be made of Hostaform ® with axle (3) made in aluminium.

In practice, rim (2) is isolated from axle (3) thanks to bushings (4) and to the lubricant contained in said chamber (25).

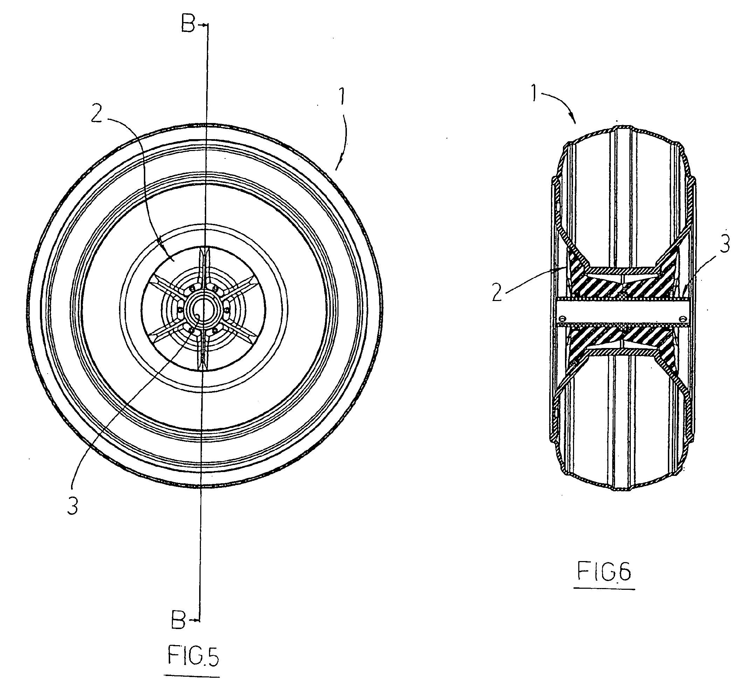

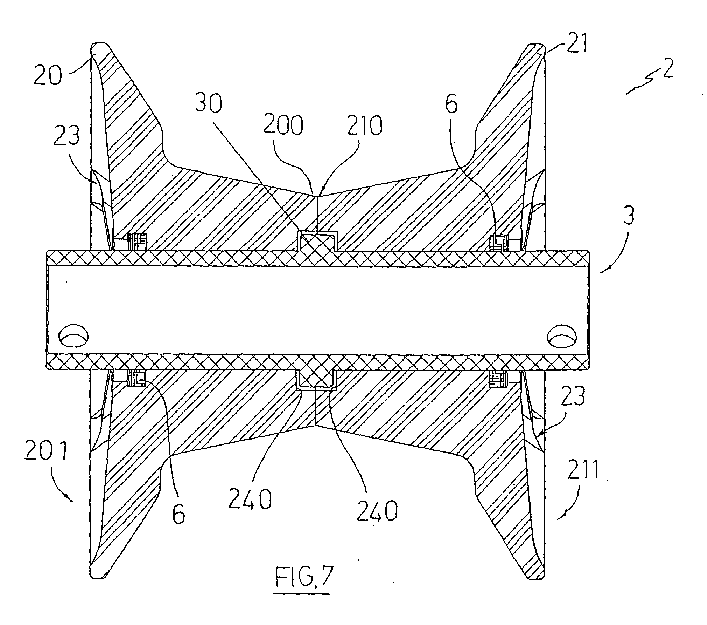

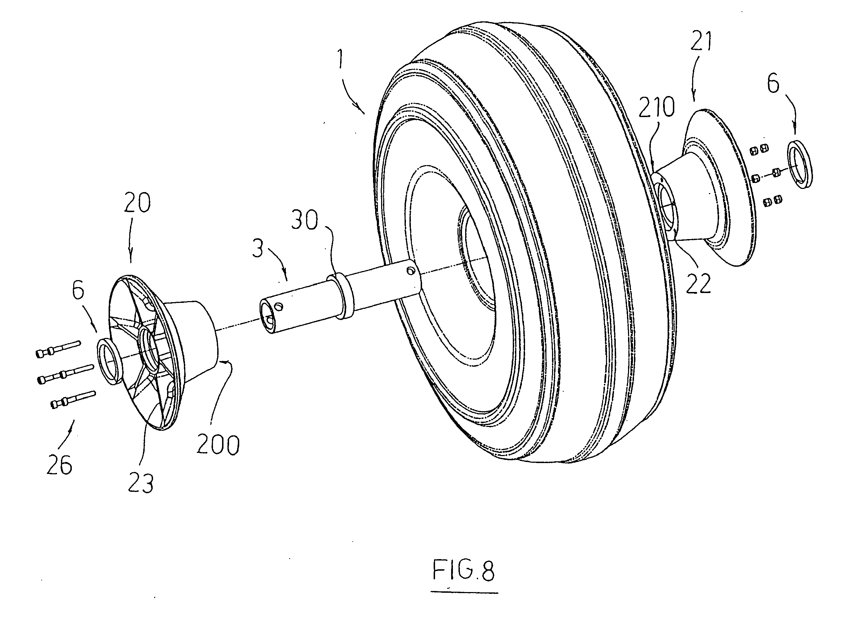

With reference to the example shown in Figs 5-8 of the enclosed drawings, the above-mentioned bushings (4) are not used. In this case, during assembly, central ring (30) of axle (3) is positioned in chamber (25) delimited by said seats (240) provided on minor bases (200,210) of the two elements (20,21) constituting the rim (2). A small quantity of lubricating material can possibly be introduced into the chamber containing said central ring (30). Two packings (6) in lubricated PTFE are mounted on the two major bases (201,211) of said elements (20,21). Axle (3), in this case, can be made in plastic material such as nylon, with elements (20,21) of the rim made of Hostaform ®.

With reference to both the examples described above, tyre (1) can be made of PVC.

The particular structure of the wheel described above, of the axle and of optional bushings ensure a perfect isolation of the central part from external elements, so as to offer the possibility of using this system without carrying out any special maintenance over long usage periods, even in extremely hostile environments, such as on beaches, for example.

In practice, the execution details may vary as regards the shape, the size, the arrangement of the elements, the kind of material used, but they are within the limits of the solution adopted and within the limits of the protection offered by the present patent.

## Claims

1. Wheel comprising a tyre (1), a rim (2) supporting tyre (1) and a tubular axle (3) which is positioned inside rim (2) and protrudes out of both sides of the rim, **characterized in that** said rim (2) features an annular inner chamber (25) which houses an annular element (30) provided by the axle (3).

2. Wheel according to claim 1 **characterized in that** said rim (2) consists of two cup-shaped conical elements (20,21) with a central through hole (24) which can be connected to each other at their corresponding minor or internal bases (200,210) by means of screws.

3. Wheel according to claim 1 **characterized in that** said axle (3) features a central ring (30).

4. Wheel according to claims 2 and 3 **characterized in that** said two elements (20,21) of rim (2) are mounted on axle (3) on opposite sides with respect to said central ring (30), with interposition of two corresponding bushings (4).

5. Wheel according to claim 4 **characterized in that** each of said bushings (4) features an annular head (40) on one of its ends whose external diameter exceeds the external diameter of the bushing body.

6. Wheel according to claim 5 **characterized in that** a support re-entrant seat (240) for the head (40) of a corresponding bushing (4) is provided on the internal base (200,201) of the two elements (20,21) constituting the rim (2).

7. Wheel according to one or more of the previous claims **characterized in that** said bushings (4) are in graphite.

8. Wheel according one or more of the previous claims **characterized in that** both elements (20,21) of rim (2) and axle (3) are in Hostaform ®.

9. Wheel according one or more of the previous claims **characterized in that** a predetermined quantity of lubricating material is introduced into said chamber (25).

10. Wheel according to one or more claims from 1 to 9 **characterized in that** two peripheral rings (5) are mounted on said axle (3).

11. Wheel according to claim 1 **characterized in that** two peripheral packings (6) are mounted on said axle (3).

12. Wheel according to claims 1-4 **characterized in that** said bushings (4) are made of graphite or graphitized nylon, **in that** elements (20,21) of rim (2) are made of Hostaform ® and **in that** axle (3) is in aluminium.

13. Wheel according to claim 11 **characterized in that** elements (20,21) of rim (2) are made of Hostaform ® and **in that** said packings (6) are in lubricated PTFE and **in that** axle (3) is in Nylon.

14. Wheel according to one or more of the previous claims **characterized in that** it is applied to wheelchairs for handicapped people.
